# EUROPEAN PATENT SPECIFICATION

(11) **EP 3 050 805 B1**
(45) Date of publication and mention of the grant of the patent: **02.08.2017**
(21) Application number: 16152684.3
(22) Date of filing: 26.01.2016
(51) Int. Cl.: B64D 17/50, B64D 17/52, B64D 17/72, B64D 17/80, B64C 39/02, B64D 17/42

(54) **EMERGENCY EQUIPMENT FOR UNMANNED AERIAL VEHICLES**
NOTAUSRÜSTUNG FÜR UNBEMANNTE LUFTFAHRZEUGE
ÉQUIPEMENT D'URGENCE POUR VÉHICULES AÉRIENS SANS PILOTE

(30) Priority: 30.01.2015 CZ 20150057; 19.02.2015 CZ 201530766 U
(43) Date of publication of application: 03.08.2016
(73) Proprietor: Vysoké ucení Technické v Brne, 601 90 Brno (CZ); Babovka, Milan, 46001 Liberec (CZ)
(72) Inventor: Popela, Robert, 59253 Svratka (CZ); Daniel, Milos, 03601 Jahodniky (SK); Pejchar, Jan, 69101 Skrdlovice (CZ); Babovka, Milan, 46312 Liberec (CZ); Nemcak, Ondrej, 75501 Vsetin (CZ)
(74) Representative: Zemanová, Veronika

(56) References cited:
- WO-A1-2007/066895
- WO-A1-2014/080409
- GB-A- 2 069 425
- US-A- 1 019 858
- US-A- 1 103 233

## Description

### Field of the Art

The invention relates to an emergency equipment for unmanned aerial vehicles, which includes a container with an opening and a parachute stored in said container. The parachute consists of a parachute canopy, suspension lines and a harness.

### State of the Art

Emergency devices of the above mentioned type are know from the prior art. Their disadvantage is that they are relatively heavy and/or they can only be used with relatively light unmanned vehicles and/or the time needed to activate the parachute is relatively long.

Emergency devices comprising a parachute and being intended for manned aerial vehicles are known from US1103233, GB2069425 and US1019858, while each of those documents discloses the features cited in the preamble of claim 1.

### Summary of the Invention

The above mentioned drawbacks of prior art are eliminated by the emergency equipment for unmanned aerial vehicles according to the invention, as defined in independent claim 1. An advantageous embodiment of the emergency equipment further comprises a switch unit, an electric power accumulator, which is connected to the switch unit and an activation line for connecting the switch unit with the pyrotechnic gas generator.

According to a further embodiment, the emergency equipment further comprises an inner divider for dividing the combustion chamber into a high-pressure chamber and a low-pressure chamber, wherein the pyrotechnic gas generator is arranged in the high-pressure chamber. In that case it is preferable when the piston part of the plug abuts both the high-pressure chamber and the low-pressure chamber while the guiding sidewalls are arranged at least partially adjacent the inner divider.

According to an especially advantageous embodiment the switch unit is controllable by a remote control, especially via a radio signal.

Preferably, the emergency equipment further comprises a removable lid for closing the opening of the container and / or a lug for fastening the parachute harness to an unmanned aerial vehicle and / or a weight attached to the parachute canopy.

### Brief Description of the Drawings

Exemplifying embodiments of the invention are schematically depicted in the drawings, wherein Fig. 1a shows a cross-section of a first embodiment, Fig. 1b shows a variant of the first embodiment, Fig. 2 shows a cross-section of a second embodiment, Fig. 3 shows a cross section of a third embodiment when assembled, Fig. 4 shows the cross section of the third embodiment shortly after activation and Fig. 5 shows a cross-section of an embodiment of a pyrotechnic gas generator.

### Description of Exemplifying Embodiments

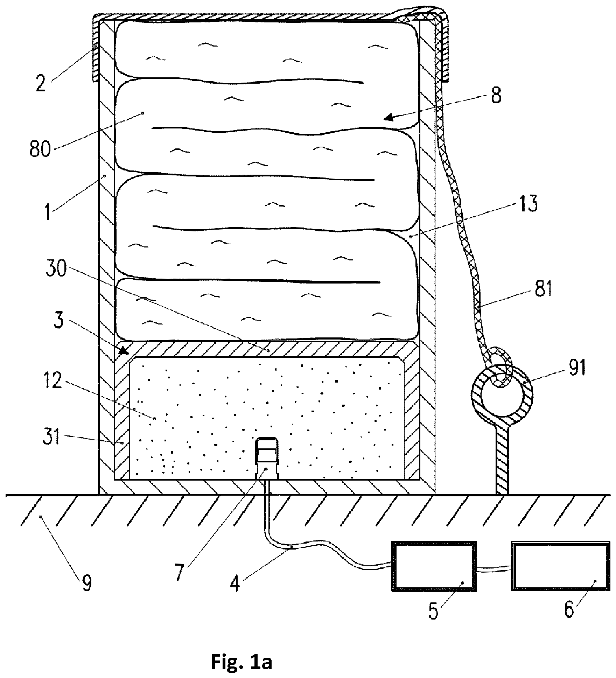

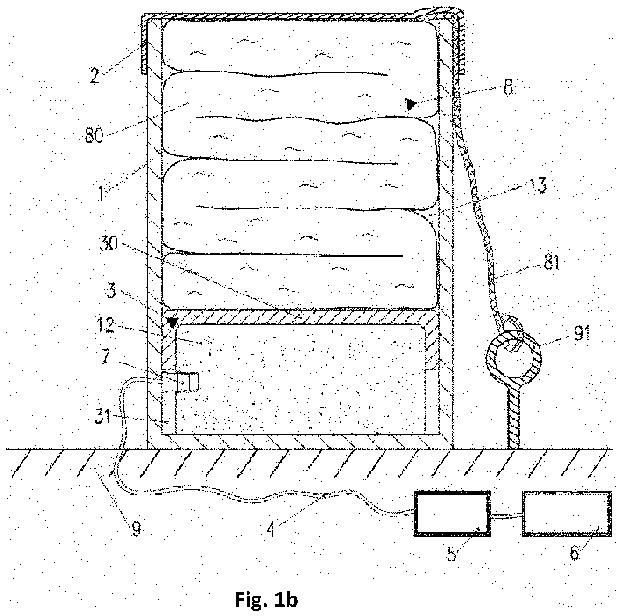

As shown in Fig. **1**, the emergency equipment comprises a container **1** with an opening which is closed with a removable lid **2**, e.g. a lid **2** made of textile. There is a combustion chamber **12** and a storage chamber **13** both arranged inside the container **1** and separated from each other by a slidably arranged plug **3**.

The plug **3** includes a piston part **30,** the shape of which matches the shape of the opening of the container **1** (with play or overlap), and also guiding sidewalls **31** which join the piston part **30** and which are arranged adjacent to the side walls of the container **1** within the combustion chamber **12,** wherein the sidewalls **31** and the plane of the piston part **30** form a substantially right angle. Advantageously, the transition between the piston part **30** and the sidewalls **31** is rounded or at least its external edges are bevelled.

The container **1** can be for example cylindrical and its diameter can be 50 to 200mm.

The container **1** can be advantageously made of a composite material or aluminium alloys and the plug **3** can be made of a similar material.

The guiding sidewalls **31** can form a continuous, e.g. cylindrical wall or they can be interrupted, e.g. the may be formed by a plurality of separately arranged bars with spaces between them.

The containers **1** shown in Figs. 1a through 4 are fixed to the base **9**.

The parachute **8** is folded within the storage chamber **13** on the top of the plug **3** such that its harness **81** which is connected to the suspension lines (not shown) is led out from the container **1** and fixed to a lug **91** which is fixed to the base **9**.

The parachute **8** comprises at least a parachute canopy **80,** suspension lines and a harness **81.**

A pyrotechnic gas generator **7** is placed in the combustion chamber **12.** It can be e.g. a pyrotechnic gas generator by Nippon Kayaku or by Indet Safety System.

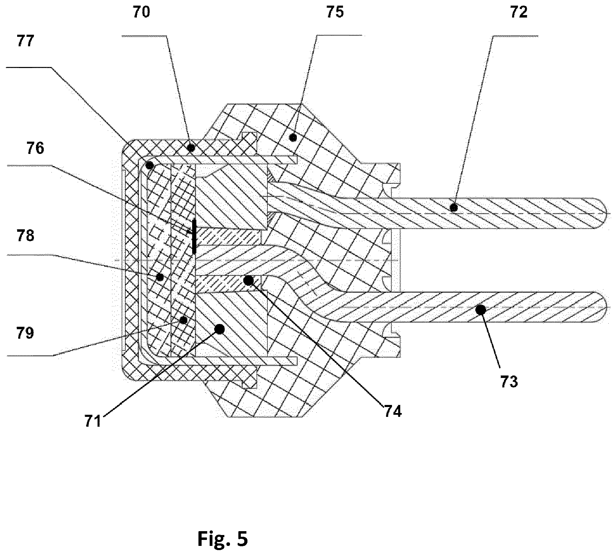

Preferably, it is the pyrotechnic gas generator **7** which is schematically depicted in Fig. 5. Such pyrotechnic gas generator **7** includes a pair of conductive contact pins **72, 73** which are fixed to a carrier **71** spaced apart from each other. The carrier **71** is made of a conductive material, e.g. stainless steel.

Preferably, the grounding pin **72** is soldered to the carrier **71.**

The power pin **73** is fitted in the carrier **71** and sealed by means of an insulating glass seal **74** and the power pin **73** is provided with circumferential grooves in the area of the glass seal **74.** In a particularly advantageous design the gap for the embedding of the power pin **73** with the seal **74** in the carrier **71** is conical widening towards a primary pyrotechnic composition **79.**

The contact ends of the pins **72, 73** extend from the carrier **71** at one of its sides whereas at its other side the functional end of the power pin **73** is interconnected with the carrier **71** or more precisely over the carrier **71** with the grounding pin **72,** by means of a a resistance wire **76,** e.g. a nickel-chrome resistance wire. The resistance wire **76** is placed in or adjacent to the primary pyrotechnic composition **79** which can be e.g. the so called ZWPP composition, which is a pyrotechnic composition containing zirconium, wolfram and potassium perchlorate as the main components.

The secondary pyrotechnic composition **78** is arranged adjacent to the primary pyrotechnic composition **79** and both are attached to the carrier **1** using an interior cup **77.** There is an insulation cup **70** pulled on the interior cup **77**, e.g. made of PA12 material. The construction is further reinforced by a plastic body **75,** e.g. made of PA6.6 polyamide filled with glass fibre.

Preferably, the total amount of the pyrotechnic compositions **78, 79** is 40 to 1000 mg. In a particular advantageous design the weight of the primary composition **79** is 40 to 60 mg and the weight of the secondary composition **78** is 110 to 150 mg, wherein both of them consist of ZWPP.

Following an electric actuating pulse brought to the pins **72, 73,** the resistance wire **76** heats up. It then ignites the primary pyrotechnic composition **79.** By burning both of the pyrotechnic compositions **78, 79,** the required amount of gas is generated within 2 milliseconds.

An activation line **4** which connects the pyrotechnic gas generator **7** to the switch unit **5** and the accumulator **6** (battery) is lead through the base **9** and through the bottom of the container **1** into the combustion chamber **12.** Alternatively, the activation line **4** does not have to lead through the base **9**.

The switch unit **5** is arranged outside the container **1** and may be controlled remotely or may be connected to a remotely controlled device which is attached to the unmanned aerial vehicle. Another option is that the switch unit **5** is controlled by the unmanned aerial vehicle autopilot based on signals that are automatically assessed by the control unit of the unmanned aerial vehicle.

Alternatively, the switch unit **5** and / or the accumulator **6** can be placed in the container **1**, e.g. at its bottom.

Remote control may be provided by means of e.g. radio signal or digital signal.

The emergency equipment shown in Fig. 1a and 1b works as follows:
The emergency equipment is installed on an unmanned aerial vehicle which is then used in a standard known way.

If necessary, i.e. especially in case of danger of the unmanned aerial vehicle crashing, the switch unit **5** is activated by a remote control. The switch unit **5** connects the accumulator and the activation line **4.** The activation line **4** heats up the pyrotechnic composition in the pyrotechnic gas generator **7** whereupon the composition is ignited and a relatively large volume of gas is formed. The pressure of the gas rapidly pushes the plug **3** piston-like towards the lid **2** and thus the lid **2** is removed and the parachute **8**, originally placed in the storage chamber **12** is shot out of the container **1.** When the folded parachute **8** is shot out of the container **1**, it forms an inertial mass which first tightens the canopy lines and then the canopy unfolds. At the same time the parachute **8** remains fixed to the base **9**, i.e. to the unmanned aerial vehicle, by means of the harness and so the fall of the unmanned aerial vehicle is slowed down and a possible damage when hitting the ground is avoided.

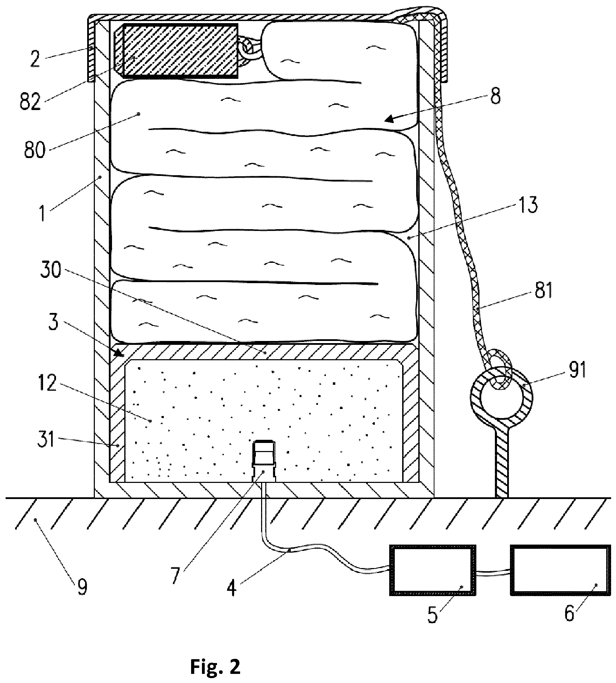

A second embodiment of the emergency equipment is depicted in Fig. 2 and it only differs from the first embodiment in that there is a weight **82** which is attached to the top of the parachute **8** canopy **80.** This weight **82** forms an additional inertial mass when the parachute 8 is shot out of the container **1** and it ensures tightening of the suspension lines even at higher forward speeds. The weight **82** can be made of e.g. steel and can weigh 10 g to 500 g.

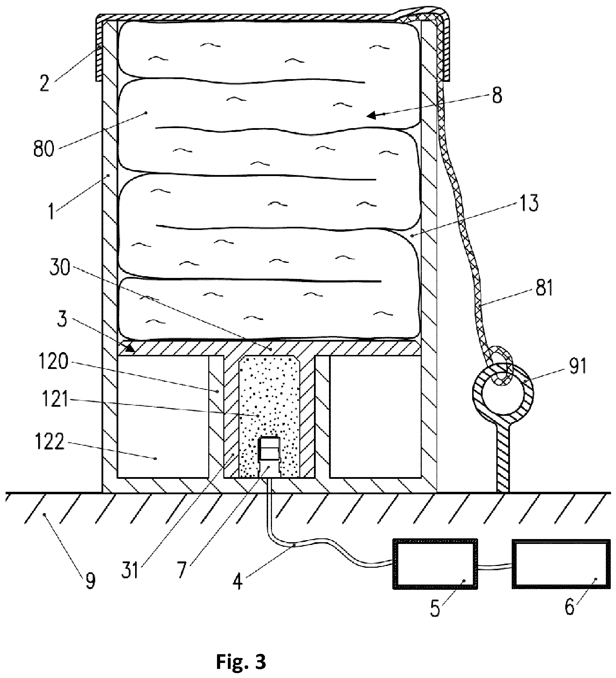

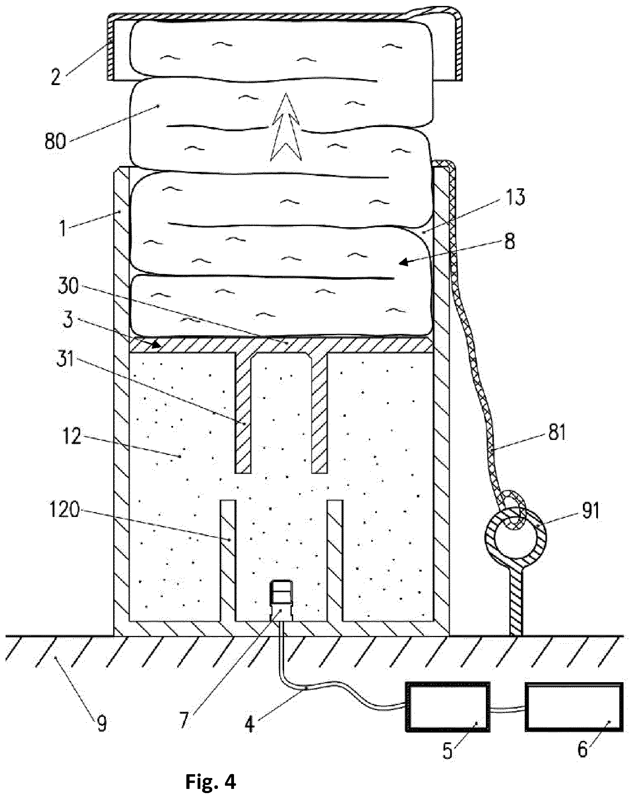

A third embodiment of the emergency equipment according to this invention is depicted in Figs. 3 and 4 and differs from the embodiment depicted in Fig. 1 mainly in the division of the combustion chamber **12** into a high-pressure chamber **121** and a low-pressure chamber **122.** The combustion chamber **12** is divided by means of an inner divider **120,** which protrudes from the bottom of the container **1** and forms an inner, e.g. cylindrical, wall. The pyrotechnic gas generator **7** is arranged at the bottom of the container **1** in the high-pressure chamber **121.** Both the low-pressure chamber **122** and the high-pressure chamber **121** are - at their side opposing the bottom of the container **1** - closed by the plug **3**.

Again, the plug **3** of this embodiment has a piston part **30** the shape of which matches the shape of the container **1** opening and it is again provided with guiding sidewalls **31.** Unlike the first and the second embodiments, the guiding sidewalls **31** do not abut the side walls of the container **1** but they abut the inner divider **120** on its inner side. Alternatively, they may be arranged adjacent its outer side.

Thanks to this design, the maximum force affecting the unmanned aerial vehicle decreases when, or more precisely immediately after the pyrotechnic composition ignites (Fig. 3), because the area of the high-pressure chamber **121** bottom is small and therefore it does not create excessive power even at a higher pressure. When the plug **3** is pushed up such that the high-pressure chamber **121** becomes connected with the low-pressure chamber **122** (Fig. 4), the area of the bottom significantly increases but the gas pressure has decreased significantly through the change of volume. In other words the recoil is divided in two steps.

The above described and shown containers **1** are cylindrical with a circular plan view and these containers **1** contain plugs **3** with a circular plan view as well. But it is also possible to create a prismatic container and adjust the plan view of the plug **3** to the plan view of the container **1** and particularly to the shape of the opening of the container **1**.

Also the pyrotechnic gas generator **7** does not always have to be arranged at the bottom of the container **1.** In a alternative embodiment the pyrotechnic gas generator **7** may be fixed to a side wall of the container **1.** The guiding sidewalls **31** have to be adjusted to this alternative design, e.g. they may be provided with a cut-out in the appropriate place. Also the activation line **4** is alternatively led through the side wall of the container **1** (as depicted in Fig. 1 b).

The switch unit **5** and the accumulator **6** may be adapted to be used exclusively for the activation of the emergency equipment or they may be a part of an control unit of the unmanned aerial vehicle.

Preferably, the emergency equipment according to the present invention is used especially with unmanned aerial vehicles with a takeoff mass of 1 to 100 kg.

If necessary there can be more than one pyrotechnic gas generator **7** arranged in the combustion chamber **12.**

Although multiple exemplary embodiments are described above, it is obvious that those skilled in the art would easily appreciate further possible alternatives to those embodiments. Hence, the scope of the present invention is not limited to the above exemplary embodiments and is rather defined by the appended claims.

## Claims

1. Emergency equipment for unmanned aerial vehicles comprising
- a container (1) having an opening,
- a parachute (8), comprising a parachute canopy (80), suspension lines and a harness (81), wherein the parachute (8) is foldable into the container (1),
- a plug (3) for dividing the inner space of the container (1) into a combustion chamber (12) and a storage chamber (13) for storing the parachute (8), while the storage chamber (13) is arranged between the plug (3) and the opening of the container (1) and while the plug (3) is adapted such that it may be ejected out of the container (1) through the opening, wherein the plug comprises a piston part (30), the shape of which matches the shape of the container (1) opening, and
- at least one pyrotechnic gas generator (7) arranged in the combustion chamber (12) and being connectable to an activation line (4)
**characterised in that**
the plug further comprises
- guiding sidewalls (31), which join the piston part (30) and are arranged adjacent to side walls or inner walls of the container (1) in the combustion chamber (12) and are suitable for guiding the ejection movement of the plug (3) in the direction of the axis of the container opening.

2. Emergency equipment according to claim 1 **characterised by** further comprising
- a switch unit (5),
- an electric power accumulator (6) which is connected to the switch unit (5) and
- an activation line (4) for connecting the switch unit (5) to the pyrotechnic gas generator(7).

3. Emergency equipment according to claim 1 **characterised by** further comprising
- an inner divider (120) for dividing the combustion chamber (12) into a high-pressure chamber (121) and a low-pressure chamber (122), wherein the pyrotechnic gas generator (7) is arranged in the high-pressure chamber (121).

4. Emergency equipment according to claim 3 **characterised in that** the piston part (30) of the plug (3) abuts both the high-pressure chamber (121) and the low-pressure chamber (122) while the guiding sidewalls (31) are arranged at least partially adjacent the inner divider (120).

5. Emergency equipment according to claim 2 **characterised in that** the switch unit (5) is remotely controllable, especially via a radio signal.

6. Emergency equipment according to any of the preceding claims **characterised by** further comprising a removable lid (2) for closing the opening of the container (1).

7. Emergency equipment according to any of the preceding claims **characterised by** further comprising a lug for fastening the parachute harness (81) to an unmanned aerial vehicle.

8. Emergency equipment according to any of the preceding claims **characterised by** further comprising a weight (82) attached to the parachute canopy.

## Patentansprüche

1. Notfallausrüstung für unbemannte Fluggeräte, umfassend:
- einen Behälter (1), der mit einer Öffnung versehen ist,
- einen Fallschirm (8), der seinerseits eine Fallschirmkappe (80), Tragschnüren sowie ein Gurtzeug (81) umfasst, wobei der Fallschirm (8) faltbar ausgebildet ist, um innerhalb des Behälters (1) unterbringbar zu sein,
- einen Stöpsel (3) zur Unterteilung des inneren Raums des Behälters (1) in eine Verbrennungskammer (12) und eine Lagerkammer (13) zur Unterbringung des Fallschirms (8), wobei die Lagerkammer (13) zwischen dem Stöpsel (3) und der Öffnung des Behälters (1) angeordnet ist und wobei der Stöpsel (3) derart angepasst ist, dass er aus dem Behälter (1) durch dessen Öffnung ausgeschoben werden kann, wobei der Stöpsel (3) ferner einen kolbenartigen Abschnitt (30) umfasst, dessen Form als komplementär zu der Form der Öffnung des Behälters (1) ausgebildet ist, und
- wenigstens einen pyrotechnischen Gaserzeuger (7), der innerhalb der Verbrennungskammer (12) angeordnet und mit einer Auslöseleitung (4) verbindbar ist,
**dadurch gekennzeichnet, dass**
der Stöpsel ferner umfasst:
- als Führungen ausgebildete Seitenwände (31), die an den kolbenartigen Abschnitt (30) anschließen und in der unimittelbaren Nähe zu Seiten- oder Innenwänden des Behälters (1) innerhalb der Verbrennungskammer (12) angeordnet sind, wobei die Seitenwände des Stöpsels zur Führung der Bewegung des auszuschiebenden Stöpsels (3) in der Richtung entlang der Achse der Öffnung des Behälters vorgesehen sind.

2. Notfallausrüstung nach Anspruch 1, **dadurch gekennzeichnet, dass** sie ferner umfasst:
- eine Schalteinheit (5),
- einen Akkumulator (6) zur Speicherung elektrischer Energie, der mit der Schalteinheit (5) verbunden ist, und
- eine Auslöseleitung (4) zum Erstellen der Verbindung zwischen der Schalteinheit (5) und dem pyrotechnischen Gaserzeuger (7).

3. Notfallausrüstung nach Anspruch 1, **dadurch gekennzeichnet, dass** sie ferner umfasst:
- eine innere Trenneinrichtung (120) zur Unterteilung der Verbrennungskammer (12) in eine Hochdruckkammer (121) und eine Niederdruckkammer (122), wobei der pyrotechnische Gaserzeuger (7) innerhalb der Hochdruckkammer (121) angeordnet ist.

4. Notfallausrüstung nach Anspruch 3, **dadurch gekennzeichnet, dass** der kolbenartige Abschnitt (30) des Stöpsels (3) sowohl an die Hochdruckkammer (121) als auch an die Niederdruckkammer (122) angrenzt, wobei die als Führungen ausgebildeten Seitenwände (31) derart angeordnet sind, dass sie zumindest teilweise an die innere Trenneinrichtung (120) angrenzen.

5. Notfallausrüstung nach Anspruch 2, **dadurch gekennzeichnet, dass** die Schalteinheit (5) fernsteuerbar, insbesondere mittels eines Funksignals, ansteuerbar ist.

6. Notfallausrüstung nach einem der vorhergehenden Ansprüche, **dadurch gekennzeichnet, dass** sie ferner einen abnehmbaren Deckel (2) umfasst, der zum Verschließen der Öffnung des Behälters (1) vorgesehen ist.

7. Notfallausrüstung nach einem der vorhergehenden Ansprüche, **dadurch gekennzeichnet, dass** sie ferner mit einer Öse zum Anbringen des Gurtzeugs (81) des Fallschirms auf dem unbemannten Fluggerät versehen ist.

8. Notfallausrüstung nach einem der vorhergehenden Ansprüche, **dadurch gekennzeichnet, dass** sie ferner ein auf der Fallschirmkappe (80) angebrachtes Gewicht (82) umfasst.

## Revendications

1. Un équipement de sauvetage pour les véhicules aériens sans pilote comprenant
- un récipient (1) comportant une ouverture,
- un parachute (8), comprenant une voilure de parachute (80), des lignes de suspension et un sangle (81), le parachute (8) étant pliable dans le récipient (1),
- un bouchon (3) pour diviser l'espace intérieur du récipient (1) en une chambre (12) de combustion et une chambre (13) de stockage pour stocker le parachute (8), tandis que la chambre (13) de stockage est disposée entre le bouchon (3) et l'ouverture du récipient (1) et le bouchon (3) est adapté de sorte qu'il puisse être avancé du récipient (1) à travers l'ouverture, où le bouchon comprend une partie (30) de piston, dont la forme correspond à la forme de l'ouverture du récipient (1), et
- au moins un générateur (7) de gaz pyrotechnique disposé dans la chambre (12) de combustion et pouvant être connecté à une ligne (4) d'activation
**caractérisé en ce que**
le bouchon comprend en outre
- des parois (31) latérales de guidage qui adhèrent la partie (30) de piston et sont disposées adjacentes aux parois latérales ou aux parois intérieures du récipient (1) dans la chambre (12) de combustion et sont aptes à guider le mouvement d'avancement du bouchon (3) dans le sens de l'axe de l'ouverture du récipient.

2. L'équipement de sauvetage selon la revendication 1, **caractérisé en ce qu'**il comprend en plus
- une unité (5) de commutation,
- un accumulateur (6) d'énergie électrique qui est relié à l'unité (5) de commutation et
- une ligne (4) d'activation pour connecter l'unité (5) de commutation au générateur (7) de gaz pyrotechnique.

3. L'équipement de sauvetage selon la revendication 1, **caractérisé en ce qu'**il comprend en outre
- une chicane (120) intérieur pour diviser la chambre (12) de combustion en une chambre (121) à haute pression et une chambre (122) à basse pression, où le générateur (7) de gaz pyrotechnique est disposé dans la chambre (121) à haute pression.

4. L'équipement de sauvetage selon la revendication 3, **caractérisé en ce que** la partie (30) de piston du bouchon (3) vient en butée à la fois sur la chambre (121) à haute pression et la chambre (122) à basse pression tandis que les parois (31) latérales de guidage sont disposées au moins partiellement adjacentes à la chicane (120) interne.

5. L'équipement de sauvetage selon la revendication 2, **caractérisé en ce que** l'unité (5) de commutation peut être contrôlée à distance, notamment via un signal radio.

6. L'équipement de sauvetage selon l'une quelconque des revendications précédentes **caractérisées en ce qu'**il comprend en outre un couvercle (2) amovible pour fermer l'ouverture du récipient (1).

7. L'équipement de sauvetage selon l'une quelconque des revendications précédentes **caractérisées en ce qu'**il comprend en outre une agrafe pour attacher le sangle (81) de parachute à un véhicule aérien sans pilote.

8. L'équipement de sauvetage selon l'une quelconque des revendications précédentes **caractérisées en ce qu'**il comprend en outre un poids (82) attaché à la voilure du parachute.
